# EUROPEAN PATENT APPLICATION

(11) **EP 0 628 913 A1**
(43) Date of publication of application: **14.12.1994**
(21) Application number: 94108807.2
(22) Date of filing: 08.06.1994
(51) Int. Cl.: G06F 13/24

(54) **Interrupt signal detection circuit**

(30) Priority: 08.06.1993 JP 137063/93
(71) Applicant: NEC CORPORATION, Tokyo (JP)
(72) Inventor: Nagasaki, Kazunori, c/o NEC CORPORATION, Tokyo (JP)
(74) Representative: Betten & Resch

(57) **Abstract**

A microcomputer comprises a detection circuit receiving an interrupt signal for generating a first detection signal when the detection circuit detects a level transition of the received interrupt signal from a low level to a high level, and a second detection signal when the detection circuit detects a level transition of the received interrupt signal from the high level to the low level. A first register is set by the first detection signal, and a second register is set by the second detection signal. A timer is provided to receive an internal clock for counting the received internal clock and to generate a synchronizing signal. A synchronous circuit receiving the first detection signal and the second detection signal for generating a capture signal in synchronism with the synchronizing signal. A capture register is coupled to the timer and receiving the capture signal, for storing the count value of the timer in synchronism with the capture signal. The first and second registers are connected to a interrupt processing unit so that when the first or second register is set, the interrupt processing unit requests an interrupt processing to a central processing unit, so that the central processing unit executes an interrupt processing while reading the content of the capture register.

## Description

### Background of the Invention

### Field of the invention

The present invention relates to a microcomputer, and more specifically to a microcomputer used for a high-speed real time control.

### Description of related art

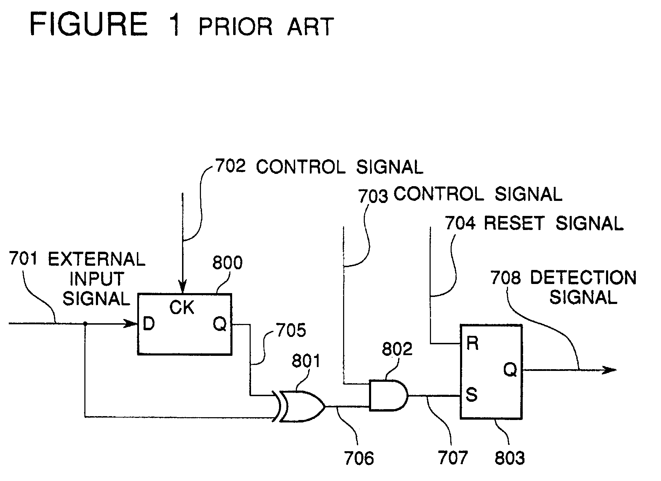

Referring to Figure 1, there is shown an example of a typical conventional signal detection circuit. The shown signal detection circuit comprises a register 800 composed of a D-type flipflop, an exclusive-OR gate 801, an AND gate 802 and a register 803 formed of S/R type flip-flop, which are connected as shown.

An external input signal 701 is applied to a data input D of the flipflop 800, and a Q output 705 of the flipflop 800 becomes at the same level as that of the input signal 701 when a control signal 702 is applied to a clock input CK of the flipflop 800. To the exclusive-OR gate 801, the external input signal 701 and the output signal 705 of the flipflop 800 are applied. When the input signals 701 and 705 are at the same level, an output 706 becomes at a low level. To the AND gate 802, a control signal 703 and the output 706 of the exclusive-OR gate 801 are applied. An output 707 of the AND gate 802 is applied to a set input S of the flipflop 803, and a reset signal 704 is applied to a reset input R of the flipflop 803. An output signal Q of the flipflop 803 constitutes a detection signal 708.

Now, operation of this signal detection circuit will be described. Initialization is effected by bringing the control signal 702 and the reset signal 704 into a high level for a moment. As a result, the detection signal 708 is brought into a low level. When the external input signal 701 changes from the low level to the high level, the output 705 of the flipflop 800 is maintained at the low level because the control signal 702 is at the low level. Accordingly, the output 706 of the exclusive-OR gate 801 is brought into the high level. Assuming that the control signal 703 is at the high level at this time, the flipflop 803 is set, so that a high level signal is outputted as the detection signal 708.

Similarly, in the case that the external input signal 701 changes from the high level to the low level, the output 706 of the exclusive-OR gate 801 goes to the high level, so that the high level signal is outputted as the detection signal 708. After the detection is made, the control signal 702 and the reset signal 704 are brought to the high level, so that the circuit is returned to an initial state.

On the other hand, in the case that the level of the external input signal 701 does not change, the output 706 of the exclusive-OR gate 801 remains at the low level, so that the detection signal 708 also remains at the low level.

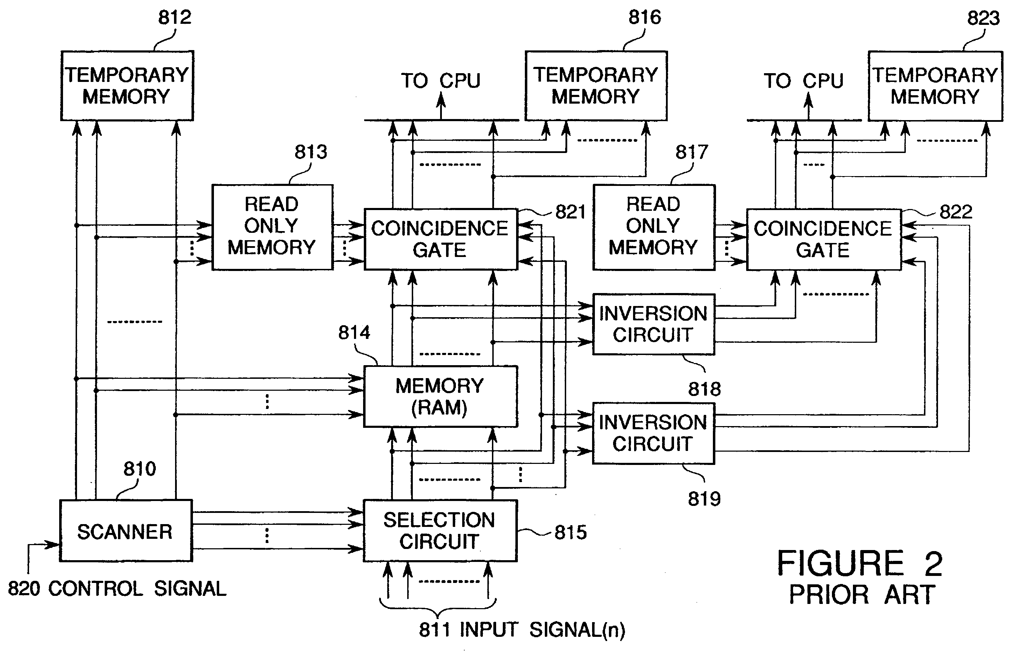

Figure 2 shows a conventional control device incorporating therein a signal detection circuit.

The shown control device includes a scanner 810 receiving a control signal 820, three temporary memories 812, 816 and 823, two read only memories 813 and 817, a rewritable memory (RAM) 814, a selection circuit 815, two inversion circuits 818 and 819, and two coincidence gates 821 and 822, which are connected as shown.

The outline of tile shown control device will be described. In this device, from a plurality of sets of signals, each set being composed of a plurality of ("n") external signals 811, one set of input signals are selected by the scanner 810 in order to detect the status economically. If this device comprises the polarity inverting circuits 818 and 819, it is also possible to effect the detection, distinguishing a rising transition from a falling transition of the external input signal 811.

In the case of determining the count value of a timer on the basis of the result of the status detection by the conventional circuit as mentioned above, since the detection circuit is shared with respect to a plurality of input signals, a detection signal corresponding to an input signal is selected by the scanner as an input signal supplied to the register for storing a timer value to be put under consideration.

However, the above mentioned conventional detection circuit shown in Figure 1 is disadvantageous in that the processing cannot be done, distinguishing whether the input signal changed from the high level to the low level or from the low level to the high level.

This disadvantage of the conventional detection circuit shown in Figure 1 could have been solved in the conventional control circuit shown in Figure 2. However, since the detection circuit is shared for a plurality of input signals, when the signal supplied to each of the external inputs frequently changes in level, the control device cannot practically respond to the frequency change of each input signal. Namely, the change in the signals supplied to signal terminals other than the input terminal chosen by the scanner cannot be detected, and therefore, an interrupt processing cannot be executed in real time.

### Summary of the Invention

Accordingly, it is an object of the present invention to provide a microcomputer which has overcome the above mentioned defect of the conventional one.

Another object of the present invention is to provide a microcomputer capable of performing an interrupt processing while distinguishing a low-to-high input signal transition and a high-to-low input signal transition from each other.

The above and other objects of the present invention are achieved in accordance with the present invention by a microcomputer comprising:
a central processing unit;
an interrupt processing unit coupled to the central processing unit;
an input terminal receiving an interrupt signal from an external;
a detection circuit receiving the interrupt signal for detecting the change in level of the interrupt signal, the detection circuit generating a first detection signal when the detection circuit detects a level transition of the interrupt signal from a low level to a high level, the detection circuit also generating a second detection signal when the detection circuit detects a level transition of the interrupt signal from the high level to the low level;
a first register set by the first detection signal, the first register being connected to the interrupt processing unit so that when the first register is set, the interrupt processing unit requests an interrupt processing to the central processing unit;
a second register set by the second detection signal, the second register being connected to the interrupt processing unit so that when the second register is set, the interrupt processing unit requests an interrupt processing to the central processing unit;
a timer receiving an internal clock for counting the received internal clock and for generating a synchronizing signal;
a synchronous circuit receiving the first detection signal, the second detection signal and the synchronizing signal for generating a capture signal; and
a third register coupled to the timer and receiving the capture signal, for storing the count value of the timer in synchronism with the capture signal.

Furthermore, in a specific embodiment of the microcomputer in accordance with present invention, the detection circuit comprises a D-type flipflop receiving the interrupt signal while receiving the internal clock as a control signal, a NAND circuit receiving the interrupt signal at its one input and an inverted output signal of the D-type flipflop at its other input, a NOR circuit receiving the interrupt signal at its one input and the inverted output signal of the D-type flipflop at its other input, and an inverter circuit for inverting an output of the NAND circuit.

In addition, the synchronous circuit comprises a second NOR circuit receiving the first detection signal the second detection signal, an inverter circuit receiving an output of the second NOR circuit, and a second D-type flipflop receiving an output of the inverter circuit in synchronism with the synchronizing signal, an output of the second D-type flipflop constituting the capture signal.

The above and other objects, features and advantages of the present invention will be apparent from the following description of preferred embodiments of the invention with reference to the accompanying drawings.

### Brief Description of the Drawings

Figure 1 is a circuit diagram of the detection circuit in the prior art;
Figure 2 is a block diagram of the control device in the prior art;
Figure 3 is a block diagram of a first embodiment of the microcomputer in accordance with the present invention;
Figure 4 is a timing chart illustrating the operation of the microcomputer shown in Figure 3;
Figure 5 is a detailed circuit diagram of a detection circuit of the first and second embodiments of the microcomputer in accordance with the present invention;
Figure 6 is a detailed circuit diagram of a synchronous circuit of the first and second embodiments of the microcomputer in accordance with the present invention; and
Figure 7 is a block diagram of a second embodiment of the microcomputer in accordance with the present invention;

### Description of the Preferred embodiments

Now, a first embodiment of the microcomputer in accordance with the present invention will be described with reference to Figures 1 to 4.

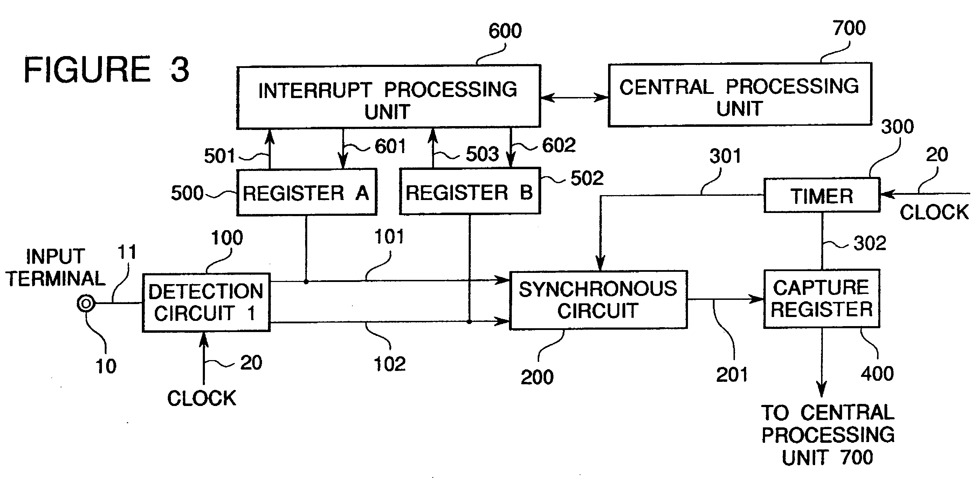

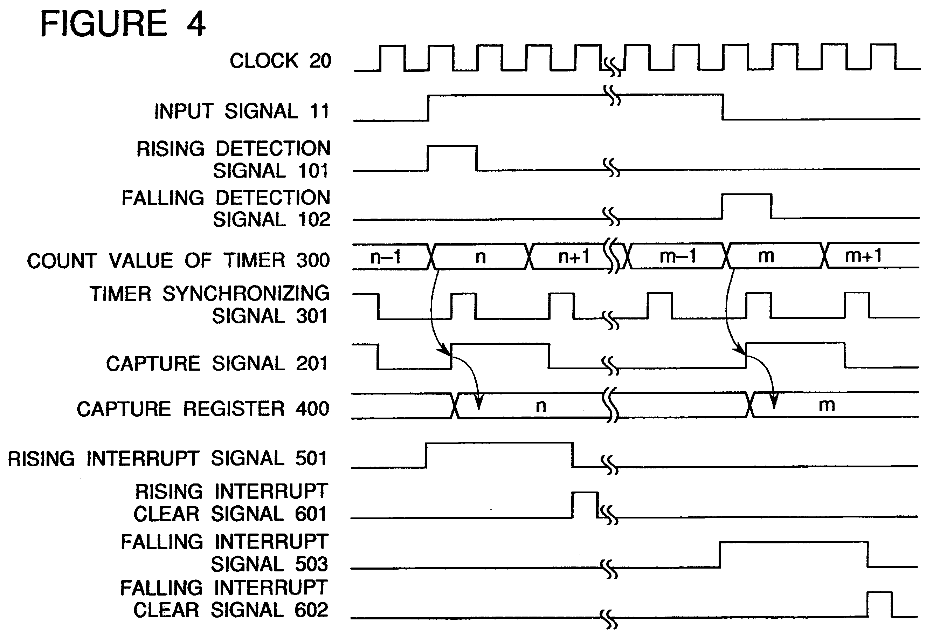

Referring to Figure 3, the microcomputer of this embodiment comprises an input terminal 10 for receiving an external interrupt input signal 11 as shown in Figure 4, a detection circuit 100 for detecting a change in level of the input signal 11 from the input terminal 10, a register-A 500 set by the detection circuit 100 when the detection circuit 100 detects a transition of the input signal 11 from the low level to the high level, a register-B 502 set by the detection circuit 100 when the detection circuit 100 detects a transition of the input signal 11 from the high level to the low level, a timer 300 for counting internal clocks, a capture register 400 for storing the value of the timer 300 in response to an output 201 of a synchronous circuit 200, an interrupt processing circuit 600 and a central processing circuit 700, which are connected as shown.

The timer 300 counts a clock 20 as shown in Figure 4, and is connected to the capture register 400 through a bus 302, so that the capture register 400 can latch the value of the timer 300. This timer 300 outputs a timer synchronizing signal 301 in synchronism with its counting operation, to the synchronous circuit 200. The capture register 400 stores the value of the timer in response to the capture signal 201 of the high level form the synchronous signal 200.

The register-A 500 is set by a rising detection signal 101 as shown in Figure 4 outputted from the detection circuit 100, and outputs a rising interrupt signal 501 as shown in Figure 4 to the interrupt processing unit 600. And then, the register-A 500 is reset by a rising interrupt clear signal 601 as shown in Figure 4 front the interrupt processing unit 600.

The register-B 502 is set by a falling detection signal 102 as shown in Figure 4 outputted from the detection circuit 100, and outputs a falling interrupt signal 503 to the interrupt processing unit 600. Then, the register-B 502 is reset by a falling interrupt clear signal 602 from the interrupt processing unit 600.

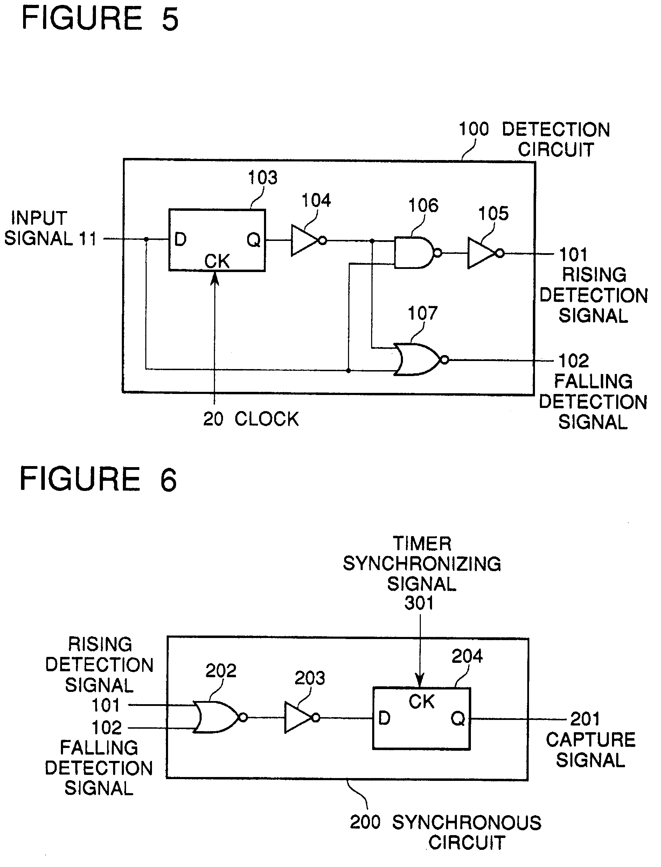

Referring to Figure 5 which is a detailed block diagram of the detection circuit 100, the detection circuit comprises a D-type flipflop 103, inverter gates 104 and 105, a NAND gate 106 and a NOR gate 107, which are connected as shown.

The input signal 11 is applied to a data input D of the D-type flipflop 103, and one input of each of the NAND gate 106 and the NOR gate 107. The input signal 11 is latched in the D-type flipflop 103 in synchronism with the clock 20 applied to a clock input CK, and a data output D of the D-type flipflop 103 is connected to the inverter gate 104. An output of the inverter gate 104 is connected to the other input of each of the NAND gate 106 and the NOR gate 107. An output of the NAND gate 106 is connected to the inverter gate 105. An output of the inverter gate 105 is outputted as the rising detection signal 101. An output of the NOR gate 107 is outputted as the falling detection circuit 102.

Now, operation of this detection circuit 100 will be described, assuming that the clock 20 is applied at a constant pulse repetition frequency as shown in Figure 4.

When the input signal 11 remains at the low level and does not change in level, the output of the D-type flipflop 103 is at the same level as that of the input signal 11, so that the output of the inverter gate 104 is at the high level. Accordingly, since the output signal of the NOR gate 107 remains at the low level, the falling detection signal 102 remains at the low level.

On the other hand, since the input signal 11 remains at the low level, the output of the NAND gate 106 is at the high level, and therefore, the output of the inverter gate 105 also remains at the low level. Thus, the rising detection signal 101 remains at the low level, too.

In the case that the input signal 11 remains at the high level and does not change in level, since the output of the D-type flipflop is at the same level as the input signal 11, the output of the inverter gate 104 is at the low level. Thus, the output signal of the NAND gate 106 is at the high level, and the output of the inverter gate 105 is at the low level. Therefore, the rising detection circuit 101 remains at the low level.

On the other hand, although the output of the inverter gate 104 is at the low level, since the input signal 11 remains at the high level, the output of the NOR gate 107 remains at the low level. Accordingly, the falling detection signal 102 remains at the low level.

In the case that the input signal 11 changes from the low level to the high level as shown in a left half of Figure 4, the output of the D-type flipflop 103 is brought into the high level in synchronism with a rising edge of the clock 20 and hence after delay of one clock period of the clock 20 at maximum. Accordingly, the output of the inverter gate 104 is still maintained at the high level during one clock period at maximum, and thereafter, is brought into the low level.

Consequently, both of the two inputs of the NAND gate 106 are maintained at the high level only during one clock period at maximum immediately after the input signal 11 changed to the high level, so that the NAND gate 106 outputs the low level signal to the inverter gate 105. Thus, as shown in the left half of Figure 4, the rising detection signal 101 is brought at the high level only during a period of one clock immediately after the input signal 11 changed to the high level.

On the other hand, since the high level of the input signal 11 is applied to the NOR gate 107 at the moment the output of the inverter gate 104 has become the low level, the output of the NOR gate 107 is at the low level, and the falling detection signal 102 remains at the low level as shown in the left half of Figure 4.

In the case that the input signal 11 goes from the high level to the low level as shown in a right half of Figure 4, the output of the D-type flipflop 103 changes to the low level in synchronism with a rising edge of the clock 20 and hence after delay of one clock period of the clock 20 at maximum, so that the output of the inverter gate 104 is brought to the high level after it has been maintained at the low level for one clock period.

Consequently, both of the two inputs of the NOR gate 107 are maintained at the low level only during one clock period immediately after the input signal 11 changed to the low level. Thus, as shown in the right half of Figure 4, the output of the NOR gate 107 is brought to the high level, so that the falling detection signal 102 becomes the high level only during one clock period immediately after the input signal 11 changed to the low level.

On the other hand, since the low level is applied to either of the two inputs of the NAND gate 106, the output of the NAND gate 106 is at the high level. Accordingly, since the output of the inverter gate 105 remains at the low level, the rising detection signal 101 remains at the low level as shown in the right half of Figure 4.

Next, the synchronous circuit 200 will be described with reference to Figure 6. This synchronous circuit 200 comprises a NOR gate 202, an inverter gate 203 and a D-type flipflop 204, which are connected as shown.

The rising detection signal 101 and the falling detection signal 102 are applied to the NOR gate 202, and an output of the NOR gate 202 is connected to the inverter gate 203. An output of the inverter gate 203 is connected to a data input D of the D-type flipflop 103, which receives at its clock input CK a timer synchronizing signal 301. so that the output of the inverter gate 203 is latched in the flipflop 103 in synchronism with the timer synchronizing signal 301. Thus, the D-type flipflop 103 outputs a capture signal 201 in synchronism with the timer synchronising signal 301.

Next, operation of the synchronous circuit 200 will be described.

When both the rising detection signal 101 and the falling detection signal 102 are at the low level, the NOR gate 202 outputs a high level signal, and therefore, the inverter gate 203 outputs a low level signal. Thus, the capture signal 201, which is an output of the D-type flipflop 103, remains at the low level.

When either the rising detection signal 101 or the falling detection signal 102 is at the high level, the NOR gate 202 outputs the low level signal, and therefore, the inverter gate 203 outputs the high level signal. Accordingly, the capture signal 201 is brought to the high level in synchronism with the timer synchronizing signal 301, as shown in Figure 4.

Now, operation of the microcomputer in accordance with the present invention will be described with reference to a timing chart shown in Figure 4. Each component operates as mentioned above.

In the example shown in Figure 4, the timer 300 receives the clock 20 and increments its count value in response to a first one of each two continuous clocks, as shown in Figure 4. In addition, the timer 300 generates the timer synchronizing signal 301 at a falling edge of the first one of each two continuous clocks, as seen from Figure 4.

In the case that the input signal 11 does not change its level, both the rising detection signal 101 and the falling detection signal 102 are maintained at the low level, so that the interrupt processing unit 600 and the capture register 400 do not change their status.

In the case that the input signal 11 changes from the low level to the high level as shown in the left half of Figure 4, the rising detection signal 101 is brought to the high level as shown in the left half of Figure 4, so that the capture signal 201 goes to the high level in response the timer synchronizing signal 301 as shown in the left half of Figure 4. At the moment the capture signal 201 becomes the high level, the current count value "n" of the timer 300 is stored in the capture register 400.

Simultaneously, the rising interrupt signal 501 is brought to the high level as shown in the left half of Figure 4, so that the interrupt processing unit 600 sends an interrupt processing request to the central processing unit 700 so as to cause the central processing unit 700 to execute a necessary interrupt processing while reading the content of the capture register 400. After the interrupt processing request is dispatched, the rising interrupt clear signal 601 is brought to the high level as shown in the left half of Figure 4, so that the register-A 500 is reset so as to be returned to the initial state.

In the case that the input signal 11 changes from the high level to the low level as shown in the right half of Figure 4, the falling detection signal 102 becomes the high level, so that the capture signal 201 is brought to the high level. Then, the value "m" of the timer 300 at the moment the capture signal 201 becomes the high level, is stored in the capture register 400.

The falling interrupt signal 503 also becomes the high level in synchronism with the falling detection signal 102 as shown in the right half of Figure 4, so that the interrupt processing unit 600 sends an interrupt processing request to the central processing unit 700 so as to cause the central processing unit 700 to execute a necessary interrupt processing while reading the content of the capture register 400. Thereafter, the falling interrupt clear signal 602 is brought to the high level, so that the register-B 502 is reset so as to be returned to the initial state.

As mentioned above, according to the present invention, it is possible to detect, in real time, the level change or transition of the input signal 11 applied to the input terminal 10, and to execute the interrupt processing, while distinguishing the high-to-low transition of the input signal 11 (the case that the input signal 11 changes from the high level to the low level) and the low-to-high transition of the input signal 11 (the case that the input signal 11 change from the low level to the high level), from each other.

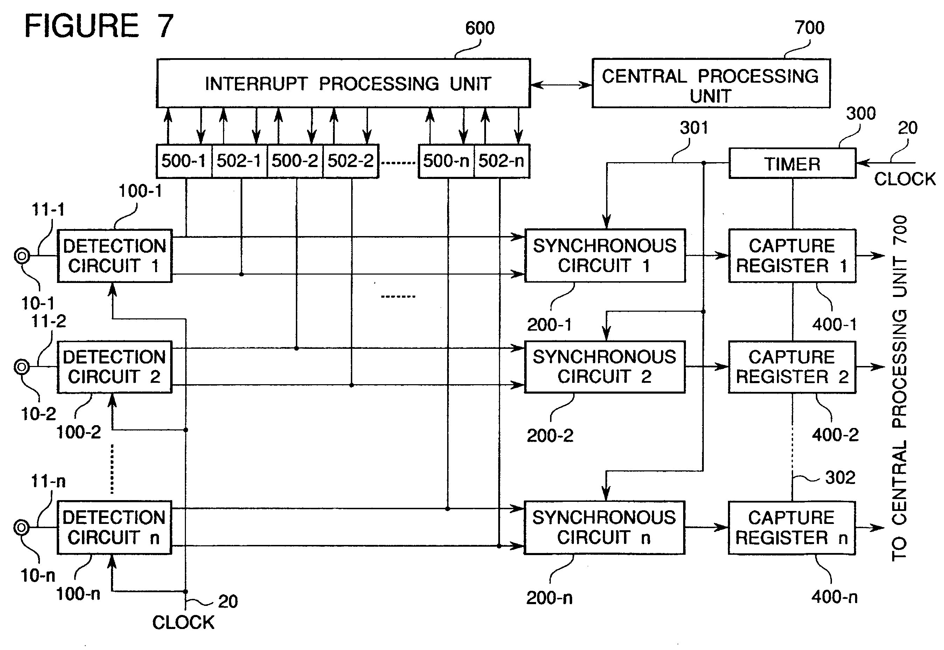

Next, a second embodiment of the microcomputer in accordance with the present invention will be described with reference to Figure 7.

Figure 7 is a block diagram illustrating one embodiment in which the present invention is applied to a microcomputer having a plurality of input terminals, for example, "n" input terminals.

In this figure, constituents identical to those of the first embodiment are given the same Reference Numerals. In addition, each "n" constituents having the same function as that of the corresponding constituent (such as the detection circuit 100, the synchronous circuit 200, the capture register 400, the register-A 500, and the register-B 502) of the first embodiment are distinguished from one another, by adding a suffix of "1" to "n'' to each Reference Numeral through a hyphen. Thus, only the arrangement is shown in this figure, and a detailed explanation thereof will be omitted.

As one example of application, measurement of the wheel speed of an automobile can be considered.

Namely, the measurement can be effected by assigning one of input terminals (10-1, 10-2, · · ·, 10-n) of this microcomputer to each one wheel of the automobile. In the case of a passenger car, four terminals are assigned, and in the case of a truck, six or eight terminals can be assigned, if necessary.

Specifically, the measurement of the speed can be effected by calculating the difference between the value of the capture register 400-1 when a (K)th external interrupt is applied to the input terminal 10-1 and the value of the capture register 400-1 at a (K-1)th interrupt interrupt is applied to the input terminal 10-1. The same operation can be effected at the other input terminals (10-2 to 10-n).

If the speed is low, the interrupt processing is effected by both of the rising interrupt requests and the falling interrupt requests. If the speed becomes high, either the rising interrupt requests or the falling interrupt requests are masked by the interrupt processing unit 600 so as to reduce the overhead of the interrupt processing time in the program.

The application to the automobile has been described, but the microcomputer in accordance with the present invention can be applied to various types of real time control.

As mentioned above, the microcomputer of the present invention can execute the processing independently, distinguishing the change of the input signal from the high level to the low level from the change of the input signal from the low level to the high level, and vice versa. Thus, it is possible to reduce the overhead of the interrupt processing time to the program, and therefore, to execute the interrupt processing adequately.

In addition, the limited number of terminals can be effectively used and each external input has its own detection circuit Thus, it is possible to execute the interrupt processing in response to the external interrupt at high speed and in real time.

The invention has thus been shown and described with reference to the specific embodiments. However, it should be noted that the present invention is in no way limited to the details of the illustrated structures but changes and modifications may be made.

## Claims

1. A microcomputer comprising:
a central processing unit;
an interrupt processing unit coupled to said central processing unit;
an input terminal receiving an interrupt signal from an external;
a detection circuit receiving said interrupt signal for detecting the change in level of said interrupt signal, said detection circuit generating a first detection signal when said detection circuit detects a level transition of said interrupt signal from a low level to a high level, said detection circuit also generating a second detection signal when said detection circuit detects a level transition of said interrupt signal from the high level to the low level;
a first register set by said first detection signal, said first register being connected to said interrupt processing unit so that when said first register is set, said interrupt processing unit requests an interrupt processing to said central processing unit;
a second register set by said second detection signal, said second register being connected to said interrupt processing unit so that when said second register is set, said interrupt processing unit requests an interrupt processing to said central processing unit;
a timer receiving an internal clock for counting the received internal clock and for generating a synchronizing signal;
a synchronous circuit receiving said first detection signal, said second detection signal and said synchronizing signal for generating a capture signal; and
a third register coupled to said timer and receiving said capture signal, for storing the count value of said timer in synchronism with said capture signal.

2. A microcomputer claimed as Claim 1 wherein said detection circuit comprises a D-type flipflop receiving said interrupt signal while receiving said internal clock as a control signal, a NAND circuit receiving said interrupt signal at its one input and an inverted output signal of said D-type flipflop at its other input, a NOR circuit receiving said interrupt signal at its one input and said inverted output signal of the D-type flipflop at its other input, and an inverter circuit for inverting an output of said NAND circuit.

3. A microcomputer claimed as Claim 2 wherein said synchronous circuit comprises a second NOR circuit receiving said first detection signal said second detection signal, an inverter circuit receiving an output of said second NOR circuit, and a second D-type flipflop receiving an output of said inverter circuit in synchronism with said synchronizing signal, an output of said second D-type flipflop constituting said capture signal.

4. A microcomputer claimed as Claim 1 wherein said synchronous circuit comprises a NOR circuit receiving said first detection signal said second detection signal, an inverter circuit receiving an output of said NOR circuit, and a D-type flipflop receiving an output of said inverter circuit in synchronism with said synchronizing signal, an output of said D-type flipflop constituting said capture signal.

5. A microcomputer comprising:
a central processing unit;
an interrupt processing unit coupled to said central processing unit;
a plurality of input terminals each receiving an interrupt signal from an external;
a plurality of detection circuits each receiving said interrupt signal through a corresponding one of said input terminals for detecting the change in level of the received interrupt signal, each of said detection circuits generating a first detection signal when said detection circuit detects a level transition of the received interrupt signal from a low level to a high level, each of said detection circuits also generating a second detection signal when said detection circuit detects a level transition of the received interrupt signal from the high level to the low level;
a plurality of first registers each set by said first detection signal outputted from a corresponding one of said detection circuits, said first registers being connected to said interrupt processing unit so that when one of said first registers is set, said interrupt processing unit requests an interrupt processing to said central processing unit;
a plurality of second registers each set by said second detection signal outputted from a corresponding one of said detection circuits, said second registers being connected to said interrupt processing unit so that when one of said second registers is set, said interrupt processing unit requests an interrupt processing to said central processing unit;
a timer receiving an internal clock for counting the received internal clock and for generating a synchronizing signal;
a plurality of synchronous circuits each receiving said synchronising signal and said first detection signal and said second detection signal outputted from a corresponding one of said detection circuits, for generating a capture signal; and
a plurality of third registers coupled in common to said timer, each of said third registers receiving said capture signal outputted from a corresponding one of said synchronous circuits, for storing the count value of said timer in synchronism with the received capture signal.

6. A microcomputer claimed as Claim 5 wherein each of said detection circuits comprises a D-type flipflop receiving said interrupt signal while receiving said internal clock as a control signal, a NAND circuit receiving said interrupt signal at its one input and an inverted output signal of said D-type flipflop at its other input, a NOR circuit receiving said interrupt signal at its one input and said inverted output signal of the D-type flipflop at its other input, and an inverter circuit for inverting an output of said NAND circuit.

7. A microcomputer claimed as Claim 6 wherein each of said synchronous circuits comprises a second NOR circuit receiving said first detection signal said second detection signal, an inverter circuit receiving an output of said second NOR circuit, and a second D-type flipflop receiving an output of said inverter circuit in synchronism with said synchronizing signal, an output of said second D-type flipflop constituting said capture signal.

8. A microcomputer claimed as Claim 5 wherein each of said synchronous circuits comprises a NOR circuit receiving said first detection signal said second detection signal, an inverter circuit receiving an output of said NOR circuit, and a D-type flipflop receiving an output of said inverter circuit in synchronism with said synchronizing signal, an output of said D-type flipflop constituting said capture signal.
